# EUROPÄISCHE PATENTANMELDUNG

(11) **EP 4 484 358 A1**
(43) Veröffentlichungstag der Anmeldung: **01.01.2025**
(21) Anmeldenummer: 24185617.8
(22) Anmeldetag: 01.07.2024
(51) Int. Cl.: B67B 3/20, B67C 3/24, B65G 47/86

(54) **VORRICHTUNG ZUM HALTEN EINES BEHÄLTERS UND VERSCHLIESSVORRICHTUNG**

(30) Priorität: 29.06.2023 DE 102023117271
(71) Anmelder: KRONES AG, 93073 Neutraubling (DE)
(72) Erfinder: Schoenfelder, Markus, 93073 Neutraubling (DE)
(74) Vertreter: Nordmeyer, Philipp Werner

(57) **Zusammenfassung**

Die vorliegende Erfindung betrifft eine Vorrichtung (1) zum Halten eines Behälters (105) in einer Behälterbehandlungsvorrichtung (100), bevorzugt zum Halten einer tragringlosen Flasche beim Aufbringen eines Schraubverschlusses (108) oder eines Aufdrückverschlusses, umfassend einen Träger (2) und einen ersten Haltearm (4) und einen zweiten Haltearm (6), die am Träger (2) angeordnet sind und zum Halten des Behälters (105) ausgebildet sind, wobei der erste Haltearm (4) und der zweite Haltearm (6) zwischen einer geöffneten Position zum Aufnehmen und Freigeben des Behälters (105) und einer geschlossenen Position zum Halten des Behälters (105) zueinander bewegbar an dem Träger (2) angeordnet sind, wobei der erste Haltearm (4) und der zweite Haltearm (6) zur Bewegung zwischen der geschlossenen Position und der geöffneten Position je um eine Schwenkachse (10) schwenkbar und um eine quer zur Schwenkachse (10) orientierte Rotationsachse (12) rotierbar sind.

## Beschreibung

### Technisches Gebiet

Die vorliegende Erfindung betrifft eine Vorrichtung zum Halten eines Behälters in einer Behälterbehandlungsvorrichtung, beispielsweise zum Halten einer tragringlosen Flasche zum Aufbringen eines Schraubverschlusses oder eines Aufdrückverschlusses. Die Erfindung betrifft ferner eine Verschließvorrichtung zum Verschließen eines befüllten Behälters mit einem Behälterverschluss, etwa einer tragringlosen Flasche mit einem Schraubverschluss oder mit einem Aufdrückverschluss.

### Stand der Technik

In Getränkeabfüllanlagen ist es bekannt, die mit dem jeweiligen Füllprodukt befüllten Behälter beispielsweise mittels eines Schraubverschlusses oder eines Aufdrückverschlusses zu verschließen. Der Schraubverschluss wird dabei mittels eines Verschließkopfes von oben auf den zu verschließenden Behälter abgesenkt und dabei rotiert. Dabei treten die Gewindegänge des Schraubverschlusses mit den im Mündungsbereich des Behälters angeordneten, zu diesen komplementären Gewindegängen in Kontakt und durch das Aufbringen der Rotationsbewegung wird der Schraubverschluss in die verschlossene Position geschraubt.

Die Schraubverschlüsse können mit einem sogenannten Garantieband versehen sein, welches typischerweise über dünne Materialbrücken mit dem eigentlichen Schraubverschluss verbunden ist und welches so ausgebildet ist, dass es beim erstmaligen Öffnen des Schraubverschlusses von dem eigentlichen Schraubverschluss abreißt, oder teilweise abreißt und teilweise mit dem Verschluss beispielsweise unter anderem über eine oder mehrere Leinen, verbunden bleibt, wie etwa bei sogenannten "Tethered Caps" gemäß der EU Richtlinie 2019/904. Auf diese Weise kann ein Konsument feststellen, ob der von ihm erworbene Getränkebehälter intakt ist, oder ob er bereits schon einmal geöffnet wurde. Hierfür interagiert das Garantieband mit einem Sicherungsring des Behälters, wobei sich das Garantieband über den Sicherungsring hinweg in Richtung Behälterunterseite erstreckt und sich die Materialbrücken dabei im Wesentlichen auf Höhe des Sicherungsrings befinden.

In herkömmlichen Getränkeabfüllanlagen weisen Behälter, welche mit einem Schraubverschluss zu verschließen sind, im Halsbereich des Behälters unterhalb des Sicherungsrings einen Tragring auf. Der Behälter wird dabei im Halsbereich unterhalb des Tragrings gegriffen, wobei der Behälter mit seinem Tragring auf der entsprechend ausgebildeten Greifvorrichtung, beispielsweise einer Klammer, aufliegt.

Um dem Drehmoment, welches durch ein Aufschrauben des Behälterverschlusses auf den Behälter ausgeübt wird, entgegenzuwirken, wird der Tragring üblicherweise in einer Halsführung mit einer sogenannten Spike-Platte gehalten, wobei die Spike-Platte nach oben gerichtete Dornen beziehungsweise Spikes aufweist, welche von unten in den Tragring des Behälters eingreifen um das über den Verschließkopf aufgebrachte Drehmoment abzustützen und damit überhaupt erst ein Aufschrauben des Behälterverschlusses auf den Behälter zu ermöglichen. Je nach Ausgestaltung des Stützrings/-bereichs können die Spikes auch nach oben innen oder nach innen zeigen. Auch eine Ausführung ohne Spikes ist möglich, denn es gibt auch "Schraubverschlüsse" die nur aufgedrückt werden, die sogenannten Aufdrückverschlüsse.

Um nach erfolgtem Verschließvorgang die dann mit dem Schraubverschluss versehenen Behälter aus der Halsführung heraus zu schleusen und nachgelagerten Produktionsschritten zuzuführen, werden in herkömmlichen Getränkeabfüllanlagen die Behälter über eine Auflaufschiene aus den Dornen der Halsführungen nach oben hin herausgehoben. Dabei fahren die Behälter mit ihren Tragringen auf eine feststehende Auflaufschiene auf, um die Tragringe außer Eingriff mit den Dornen zu bringen und so ein Überführen der befüllten und nun verschlossenen Behälter an eine nachfolgende Behandlungsstation, beispielsweise über einen Auslaufstern, zu ermöglichen.

Ferner sind Vorrichtungen bekannt, bei welchen unterhalb der Aufnahme für den Tragring eine Spike-Platte zwischen einer Eingriffsposition der Dornen und einer geöffneten Position, bei welcher die Spike-Platte nach unten verschwenkt ist, bewegbar ist. Eine derartige Vorrichtung ist beispielsweise der WO 2009/068633 A1 zu entnehmen. Damit es bei einem Bewegen der Spikeplatte in die geöffnete Position nicht zu einer Kollision mit dem Behälter kommt, hat der Behälter unterhalb seines Tragrings einen vergleichsweise langen, im Wesentlichen zylindrisch ausgebildeten Abschnitt des Halsbereichs aufzuweisen.

Eine neue Generation von Behältern weist keinen Tragring auf. Diese Behälter werden auch tragringlose Flaschen genannt. Diese tragringlosen Flaschen weisen lediglich einen Sicherungsring auf, mit welchem das Garantieband eines Schraubverschlusses so wechselwirken kann, dass die Garantiefunktion weiterhin bestehen bleibt. Der Vorteil tragringloser Flaschen besteht in der Materialersparnis gegenüber Behältern mit Tragring. Aufgrund des Fehlens des Tragrings ist ein Handling mit einer starren Spikeplatte in diesem Bereich nicht mehr möglich, da der Verschluss und insbesondere das Garantieband den Sicherungsring im Wesentlichen komplett umschließen. Mit anderen Worten ist der Sicherungsring bei aufgebrachtem Schraubverschluss nicht mehr frei zugänglich, sondern durch das Garantieband überdeckt. Ein Herausheben der befüllten und verschlossenen Flaschen mittels einer bekannten feststehenden Auflaufschiene kann hier dazu führen, dass das Garantieband, welches dann mit der Auflaufschiene in Kontakt kommt, verschleißt, beschädigt wird oder gar abreißt.

Alternativ kann ein Behälterverschluss auch rein aufgedrückt werden. Dann spricht man von Aufdrückverschlüssen. Bei dem Aufbringen dieser Verschlüsse findet keine Verschließkopfumdrehung statt, sondern der Verschluss wird nur aufgedrückt. Auch Aufdrückverschlüsse können vorgesehen sein, auf tragringlose Flaschen aufgebracht zu werden.

Für das Handling tragringloser Flaschen, insbesondere das Halten einer tragringlosen Flasche während des Verschließen mit einem Behälterverschluss, sind entsprechend Vorrichtungen bekannt, welche einen Träger und eine an diesem Träger angeordnete Halteanordnung umfassen, wobei die Halteanordnung einen kragenförmigen Stützvorsprung zum Stützen des Behälters an einem Sicherungsring des Behälters umfasst. Eine derartige Vorrichtung ist beispielsweise aus der DE 10 2014105 907 A1 bekannt. Der Stützvorsprung ist derart ausgebildet, dass er von unten und radial innerhalb des Garantiebands des aufgebrachten Behälterverschlusses den Sicherungsring des Behälters kontaktieren und den Behälter dadurch auch bei aufgebrachtem Behälterverschluss direkt halten kann. Um ein Anheben und Absenken des Behälters relativ zum Stützvorsprung zu gewährleisten, sind parallel zur Behälterachse bewegliche Anhebefinger vorgesehen, mittels welchen der Behälter vom Stützvorsprung nach oben abgehoben werden kann. Die Anhebefinger treten dabei mit dem Garantieband des aufgebrachten Behälterverschlusses in Kontakt.

Um das Handling solcher tragringlosen Flaschen zu ermöglichen, weisen diese an ihrem Halsbereich unterhalb des Sicherungsrings einen vergleichsweise langen zylindrischen oder leicht kegeligen Abschnitt auf, der das entsprechende Anheben und Absenken der Anhebefinger ermöglicht. Aus Gründen einer weiteren Materialeinsparung, des optischen Gesamteindrucks von Behälter und aufgebrachtem Behälterverschluss, sowie einer verbesserten Manipulationssicherheit des Garantiebandes von unterhalb des Behälterverschlusses ist der Abschnitt des Halsbereichs bei tragringlosen Flaschen neuerer Generation signifikant verkürzt. Bei derart ausgebildeten tragringlosen Flaschen ist es nicht mehr möglich, den für die Verwendung herkömmlicher Halteanordnungen erforderlichen Hub zwischen Stützvorsprung und Behälter durch ein Anheben und Absenken parallel zur Behälterachse bereitzustellen, da die jeweiligen Anlagenkomponenten dann am Schulterbereich des Behälters anschlagen würden.

Aus der DE 10 2019 113 653 A1 ist eine Vorrichtung zum Halten einer tragringlosen Flasche zum Aufbringen eines Schraubverschlusses bekannt, umfassend einen Träger und eine am Träger angeordnete Halteanordnung mit einem Stützvorsprungbereich eines ersten Haltearms und einem Stützvorsprungbereich eines zweiten Haltearms, wobei der erste und der zweite Haltearm zum Bewegen zwischen einer geöffneten Position und einer geschlossenen Position jeweils um in einer parallel zu einer Halteebene erstreckenden Schwenkachsenebene liegenden Schwenkachsen zueinander verschwenkbar an dem Träger angeordnet sind.

### Darstellung der Erfindung

Ausgehend von dem bekannten Stand der Technik ist es eine Aufgabe der vorliegenden Erfindung, eine verbesserte Vorrichtung zum Halten eines Behälters in einer Behälterbehandlungsvorrichtung, bevorzugt zum Halten einer tragringlosen Flasche zum Aufbringen eines Schraubverschlusses oder eines Aufdrückverschlusses, sowie eine verbesserte Behälterbehandlungsvorrichtung bereitzustellen.

Die Aufgabe wird durch eine Vorrichtung zum Halten eines Behälters in einer Behälterbehandlungsvorrichtung, bevorzugt zum Halten einer tragringlosen Flasche zum Aufbringen eines Schraubverschlusses mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Halten eines Behälters in einer Behälterbehandlungsvorrichtung, bevorzugt zum Halten einer tragringlosen Flasche zum Aufbringen eines Schraubverschlusses oder eines Aufdrückverschlusses, vorgeschlagen, umfassend einen Träger und einen am Träger angeordneten ersten Haltearm und zweiten Haltearm zum Halten des Behälters, wobei der erste Haltearm und der zweite Haltearm zwischen einer geöffneten Position, in welcher ein Behälter zugeführt und aufgenommen werden und analog von der Vorrichtung freigegeben und aus der Vorrichtung abgeführt werden kann, und einer geschlossenen Position zum Halten des Behälters zueinander bewegbar an dem Träger angeordnet sind.

Der erste Haltearm und der zweite Haltearm sind zwischen der geöffneten Position und der geschlossenen Position je um eine Schwenkachse schwenkbar und um eine quer zur Schwenkachse orientierte Rotationsachse rotierbar.

Mit anderen Worten führen die Haltearme von der geöffneten Position in die geschlossene Position sowie von der geschlossenen Position in die geöffnete Position je eine vorgegebene Schwenkbewegung um die jeweilige Schwenkachse und eine vorgegebene Rotationsbewegung um die quer zur Schwenkachse orientierte Rotationsachse aus. Die Bewegung der Haltearme können synchron oder asynchron erfolgen. Es ist auch möglich, dass die beiden Haltearme sich jeweils zumindest teilweise gleichmäßig und/oder zumindest teilweise nicht gleichmäßig bewegen.

Unter dem Begriff "quer" bzw. einer "queren Orientierung einer geometrischen Achse zu einer anderen geometrischen Achse" wird vorliegend verstanden, dass diese beiden Achsen einen Winkel größer 0 Grad einschließen bzw. bei windschiefen Achsen die eine Achse mit der Parallelprojektion der anderen Achse auf die erste Achse einen Winkel größer 0 Grad einschließen, also nicht parallel sind. Die Achsen können beispielsweise zueinander senkrecht stehen. Eine schräge Anordnung ungleich 90° in alle Richtungen ist ebenso möglich.

Dadurch, dass der erste Haltearm und der zweite Haltearm zwischen der geöffneten Position und der geschlossenen Position je um eine Schwenkachse schwenkbar und um eine quer zur Schwenkachse orientierte, senkrecht zur Halteebene angeordnete Rotationsachse rotierbar sind kann gegenüber Vorrichtungen mit rein verschwenkenden Haltearmen ein vergrößerter Öffnungswinkel bereitgestellt werden. Entsprechend ist das Zuführen und Abführen von Behältern erleichtert, insbesondere hinsichtlich der Präzision des Zuführens. Zudem können die die Vorrichtung aufweisende Behälterbehandlungsvorrichtung und Vorrichtungen, die Behälter an die Behälterbehandlungsvorrichtung zuführen und Behälter von der Behälterbehandlungsvorrichtung abführen, kompakter aufgebaut sein, insbesondere hinsichtlich eines erforderlichen Beförderungs-Teilkreisdurchmessers.

Aufgrund des zusätzlichen Rotierens der Haltearme können letztere, spezifischer ein Bereich der Haltearme, mit welchem sie den Behälter zum Halten kontaktieren, in der geöffneten Position weiter voneinander weg bewegt werden, als bei einer reinen Schwenkbewegung. Entsprechend kann bei zugleich kompakter Bauweise der Vorrichtung ein Auflagebereich, mittels welchem die Haltearme je mit dem Behälter in Kontakt treten, größer ausgebildet sein als bei herkömmlichen Vorrichtungen aus dem Stand der Technik. Insbesondere kann der Auflagebereich über den breitesten Bereich des Behälters senkrecht zur Förderrichtung der Behälter, welcher bei Behälterbehandlungsvorrichtungen in Rundläuferbauweise beispielsweise bezogen auf die zentrale Drehachse des Rundläuferkarussells der Behälterbehandlungsvorrichtung eine nach radial außen weisende Richtung darstellt, hinaus ausgebildet sein. Der große Auflagebereich ermöglicht es, den Behälter stabil in der Vorrichtung zu halten. Insbesondere ist die Gefahr eines Verkippens der Mündung des Behälters beim Verschließen der aufgrund der Förderung des Behälters, insbesondere bei einer rotatorischen Förderrichtung, gering. So können Verschließfehler in Vergleich zu herkömmlichen Vorrichtungen aus dem Stand der Technik reduziert oder gar gänzlich vermieden werden. Entsprechend kann auch auf eine bei Vorrichtungen aus dem Stand der Technik oftmals notwendige Außenumführung des Behälters an der Behälterbehandlungsvorrichtung verzichtet werden, welche bei herkömmlichen Vorrichtungen vorgesehen sein muss, um die Behälter beispielsweise an deren Hals bezogen auf die zentrale Drehachse radial außen zu führen und die Flaschenmündung unterstützen muss, um wegkippende Halsformen zu vermeiden da dies zu Verschließfehlern führt.

Die Schwenkachse und die Rotationsachse jedes Haltearms können einen Schnittpunkt aufweisen oder windschief zueinander sein.

Gemäß eine Ausführungsform kann der vorstehend beschriebene Winkel zwischen der Schwenkachse und der Rotationsachse, bzw. zwischen einer Parallelprojektion der Schwenkachse auf die Rotationsachse und der Rotationachse, oder umgekehrt, in einem Bereich von 30° bis 90°, beispielsweise 45° bis 90° oder 60° bis 90° liegen. Die Schwenkachse und die Rotationsachse jedes Haltearms können senkrecht zueinander angeordnet sein.

Die Haltearme können in der geschlossenen Position eine Halteebene definieren und die Rotationsachse kann senkrecht zur Halteebene angeordnet sein.

Gemäß einer Ausführungsform können die Schwenkachsen in der Halteebene oder in einer sich parallel zur Halteebene erstreckenden Schwenkachsenebene liegen.

Um ein Fördern tragringloser Behälter ermöglichen oder verbessern zu können, können die Haltearme je einen kragenförmigen Stützvorsprungbereich zum Ausbilden eines Stützvorsprungs zum Stützen des Behälters an einem Sicherungsring des Behälters umfassen.

Mit anderen Worten formen die beiden Stützvorsprungbereiche gemäß einer optionalen Ausführungsform gemeinsam einen kragenförmigen Stützvorsprung zum Stützen des Behälters an einem Sicherungsring des Behälters. Die Stützvorsprungbereiche können sich jeweils von ihrem Haltearm derart erstrecken, dass sie nach oben oder nach radial innen und oben erstrecken, so dass sie das Garantieband des Behälterverschlusses untergreifen, ohne dabei einen Teil der Gewichtskraft des Behälters über das Garantieband aufzunehmen. Hierzu können die Stützvorsprungbereiche derart ausgebildet sein, dass sie und der restliche Haltearm in der geschlossenen Position einen Abstand zum Garantieband des auf den Behälter aufgebrachten Behälterverschlusses aufweisen.

Der Begriff "oben" beschreibt eine Richtung, die in einer vorgesehenen Einbaulage der Vorrichtung entgegen der Gravitationsrichtung orientiert ist.

Wenn die Haltearme die Stützvorsprungbereiche umfassen, können die Stützvorsprungbereiche der Haltearme in der geschlossenen Position die Halteebene definieren. Die Stützvorsprungbereiche können in der geöffneten Position in Blickrichtung einer senkrecht zur Halteebene orientierten, mittig zwischen den in der geschlossenen Position befindlichen Stützvorsprungbereichen angeordneten Referenzachse radial außerhalb der Position der Stützvorsprungbereiche in der geschlossenen Position vorliegen, sowie in der geöffneten Position in Richtung der Referenzachse gesehen ein niedrigeres Höhenniveau als die Stützvorsprungbereiche in der geschlossenen Position aufweisen.

Bei Vorhandensein der Stützvorsprungbereiche können die Haltearme die Halteebene anders ausgedrückt via ihre Stützvorsprungbereiche definieren. Die Stützvorsprungbereiche stellen dann den Auflagebereich der Haltearme dar.

Der Begriff "niedrigeres Höhenniveau" ist analog zum zuvor erklärten Begriff "oben" auf die Gravitationsrichtung der Erde bezogen. Mithin bedeutet "auf einem niedrigeren Höhenniveau angeordnet" oder "auf einem niedrigeren Höhenniveau vorliegend" näher am Erdmittelpunkt als das Referenzobjekt bzw. die Referenzposition analog zur Höhenangabe in Bezug auf die mittlere Meereshöhe/orthometrische Höhe bzw. das Normalhöhennull oder Vertikaldatum. Er beschreibt also eine Anordnung unterhalb der Referenz, wobei die verglichenen Objekte einen Versatz quer zur Gravitationsrichtung aufweisen können, also nicht auf eine Parallelverschiebung in Gravitationsrichtung beschränkt sind.

Die Haltearme, spezifischer sofern vorhanden deren kragenförmige Stützvorsprungbereiche, können derart ausgebildet sein, dass ein durch die Vorrichtung gehaltener Behälter mit seiner Behälterlängsachse senkrecht zur Halteebene gehalten ist.

Gemäß einer Ausführungsform kann in einer vorgesehenen Einbaulage der Vorrichtung die Halteebene senkrecht zur Gravitationsrichtung, mithin horizontal, orientiert sein.

Gemäß einer Ausführungsform kann die Vorrichtung derart ausgebildet sein, dass bei einem Bewegen der Haltearme aus der geschlossenen Position in die geöffnete Position in einem ersten Bewegungsabschnitt die Haltearme lediglich, also ausschließlich, eine Rotationsbewegung um die Rotationsachse erfahren, und in einem sich an den ersten Bewegungsabschnitt anschließenden weiteren Bewegungsabschnitt die Haltearme eine Schwenkbewegung um die Schwenkachse erfahren oder eine Schwenkbewegung um die Schwenkachse und eine weitere Rotationsbewegung um die Rotationsachse erfahren, und umgekehrt.

Unter "umgekehrt" ist hier die Bewegung aus der geöffneten Position in die geschlossene Position in analoger Reihenfolge gemeint, also dass die Vorrichtung entsprechend auch derart ausgebildet ist, dass bei einem Bewegen der Haltearme aus der geschlossenen Position in die geöffnete Position beginnend mit dem weiteren Bewegungsabschnitt die Haltearme eine Schwenkbewegung um die Schwenkachse erfahren oder eine Schwenkbewegung um die Schwenkachse und eine weitere Rotationsbewegung um die Rotationsachse erfahren, und im sich anschließenden ersten Bewegungsabschnitt lediglich, also ausschließlich, eine Rotationsbewegung um die Rotationsachse erfahren.

Alternativ kann die Vorrichtung derart ausgebildet sein, dass bei einem Bewegen der Haltearme aus der geschlossenen Position in die geöffnete Position in einen ersten Bewegungsabschnitt die Haltearme nur eine Schwenkbewegung um ihre Schwenkachse erfahren, und in einem sich an den ersten Bewegungsabschnitt anschließenden weiteren Bewegungsabschnitt die Haltearme eine Rotationsbewegung um die Rotationsachse erfahren oder eine Rotationsbewegung um die Rotationsachse und eine weitere Schwenkbewegung um die Schwenkachse erfahren, und umgekehrt.

Unter "umgekehrt" ist hier wieder die Bewegung aus der geöffneten Position in die geschlossene Position in analoger Reihenfolge gemeint, also dass die Vorrichtung entsprechend auch derart ausgebildet ist, dass bei einem Bewegen der Haltearme aus der geöffneten Position in die geschlossene Position beginnend mit dem weiteren Bewegungsabschnitt die Haltearme eine Rotationsbewegung um die Rotationsachse erfahren oder eine Rotationsbewegung um die Rotationsachse und eine weitere Schwenkbewegung um die Schwenkachse erfahren, und im sich anschließenden ersten Bewegungsabschnitt lediglich, also ausschließlich, eine Schwenkbewegung um ihre Schwenkachse erfahren.

Um die Position der Haltearme gezielt steuern zu können, kann gemäß einer Ausführungsform die Vorrichtung eine Aktuatoreinheit zum Vorgeben der Position der Haltearme umfassen. Die Aktuatoreinheit kann hierbei einen ersten Aktuatorteil zum Steuern der Schwenkbewegung der Haltearme um deren jeweilige Schwenkachse und einen zweiten Aktuatorteil zum Steuern der Rotationsbewegung der Haltearme um deren jeweilige Rotationsachse umfassen. Der erste Aktuatorteil kann optional getrennt vom zweiten Aktuatorteil steuerbar sein.

Um die Haltearme zwischen der geöffneten Position und der geschlossenen Position bewegen zu können, kann die Vorrichtung eine Getriebeanordnung zum Bewegen der Haltearme umfassen. Die Getriebeanordnung kann beispielsweise am Träger und/oder im Inneren des Träger angeordnet sein. Die Getriebeanordnung kann zumindest teilweise Teil der Aktuatoreinheit sein.

Die Haltearme können je drehfest mit einer um die Schwenkachse schwenkbaren Getriebestange verbunden sein. Die Getriebestange kann zumindest einen radialen Hebelarm aufweisen, der in einem vorgegebenen radialen Abstand zur Schwenkachse an der Getriebestange angeordnet ist.

Gemäß einer Ausführungsform kann der erste Aktuatorteil über je eine Pleuelstange mit je einem radialen Hebelarm der drehfest mit einem Haltearm verbundenen, um die Schwenkachse des verbundenen Haltearms schwenkbaren Getriebestange verbunden sein. Vorteilhafterweise ist die Pleuelstange drehbar mit dem Hebelarm verbunden, beispielweise über ein Drehgelenk, welches optional aus Kugelgelenk ausgeführt sein kann. Entsprechend kann ein robustes und präzises Steuern der Schwenkposition des Haltearms erreicht werden.

Alternativ oder zusätzlich kann der zweite Aktuatorteil über je eine Pleuelstange mit zumindest einer oder beider Getriebestangen der Haltearme verbunden sein, beispielsweise drehbar verbunden, etwa über ein Drehgelenk, optional über ein Kugelgelenk. Entsprechend kann ein robustes und präzises Steuern der Rotationsbewegung des Haltearms erreicht werden.

Auch kann der erste Aktuatorteil einen plattenförmigen Grundkörper aufweisen, an welchem zumindest eine Führungsbahn zum vorgeben der Winkelposition zumindest eines Haltearms relativ zu der ihm zugeordneten Schwenkachse angeordnet ist.

Alternativ oder zusätzlich kann der zweite Aktuatorteil einen plattenförmigen Grundkörper aufweisen, an welchem zumindest eine Führungsbahn zum vorgeben der Winkelposition zumindest eines Haltearms relativ zu der ihm zugeordneten Rotationsachse angeordnet sein.

Wenn die Getriebestangen beabstandet von ihrer Verbindung mit dem Haltearm, an welcher sie drehbar gelagert sind, translatorisch geführt sind, beispielsweise gegenüber ihrer Verbindung mit dem Haltearm, können auf einfache und robuste Weise die Rotationsachsen der Haltearme vorgegeben werden.

Die Haltearme können in einer optional parallel zur Halteebene orientierten Translationsebene geführt sein, wobei optional die Getriebestangen je einen Gleitstein umfassen, der in einer Führung, beispielsweise einer Führungsnut, geführt sein können.

Gemäß einer Ausführungsform kann jeder Haltearm an einer ersten Seite eines Kugelelements eines Kugelgelenks befestigt sein und ferner kann die Getriebestange an der dem Haltearm gegenüberliegenden zweiten Seite des Kugelelements am Kugelelements befestigt sein.

Gemäß einer Ausführungsform kann die Vorrichtung, spezifischer, falls vorhanden, ihre Aktuatoreinheit, zumindest ein Federelement zum Vorspannen der Haltearme in eine vorgegebene Position, beispielsweise in die geschlossene Position oder in die geöffnete Position, umfassen.

Alternativ oder zusätzlich kann die Aktuatoreinheit zumindest ein Federelement zum Vorspannen des ersten Aktuatorteils und/oder des zweiten Aktuatorteils in eine vorgegebene Position umfassen.

Gemäß einer Ausführungsform kann die Aktuatoreinheit pneumatisch, hydraulisch und/oder elektrisch steuerbar ausgebildet sein, und/oder ein Steuerelement zum Interagieren mit einer Kurvensteuerung und/oder einer Kulissenführung und/oder einer Nockensteuerung umfassen.

Gemäß einer Ausführungsform können die Haltearme derart ausgebildet sein, dass in der geschlossenen Position der Behälter durch die kragenförmigen Stützvorsprungbereiche an der Unterseite des Sicherungsrings des Behälters gestützt ist und/oder in der geschlossenen Position der Behälter durch einen Richtung Behälterlängsachse orientierten Klemmbereich der Haltearme radial geklemmt ist. Das Aufbringen der Klemmkraft und deren Höhe kann insbesondere über eine Steuerung der Rotationsbewegung der Haltearme um deren Rotationsachsen gesteuert werden.

Der Träger kann einen Auflagerabschnitt umfassen, der zum Abstützen des Behälters am Sicherungsring des Behälters oder am Garantieband eines auf den Behälter aufgebrachten Behälterverschlusses bei in die geöffnete Position bewegten Haltearmen vorgesehen ist. Der Auflagerabschnitt kann optional mit einem vorgegebenen Abstand unterhalb der durch die in der geschlossenen Position befindlichen Haltearme, spezifischer sofern vorhanden der durch die Stützvorsprungbereiche vorgegebenen Halteebene angeordnet sein, wobei der Abstand beispielsweise derart ausgebildet ist, dass in der geschlossenen Position der Haltearme der aufgebrachte Behälterverschluss von dem Auflagerabschnitt beabstandet ist, beispielsweise mit einer Distanz von 0,1 mm bis 2 mm, optional 0,3 mm bis 1 mm. So kann der verschlossene Behälter nach dem Freigeben des Behälters durch die Haltearme, indem letztere in die geöffnete Position bewegt wurden, durch den Auflagerabschnitt gestützt werden.

Die Stützvorsprungbereiche der Haltearme können optional zumindest einen spitz zulaufenden Dorn zum Hemmen eines Verdrehens eines durch die Haltearme aufgenommenen Behälters um seine Behälterachse aufweisen, wobei optional zumindest ein Dorn in der geschlossenen Position nach oben gerichtet ist und/oder zumindest ein Dorn in der geschlossenen Position in Richtung auf den anderen Stützvorsprungbereich zu, also bezogen auf eine Mittellängsachse eines in den Haltearmen gehaltenen Behälters radial nach innen, gerichtet ist.

Optional kann die Schwenkachsenebene, in welcher optional die Schwenkachsen liegen, oberhalb der beispielweise durch die Stützvorsprungbereiche vorgegebenen Halteebene angeordnet sein. Alternativ kann die Schwenkachsenebene auf Höhe der Halteebene angeordnet sein bzw. mit dieser zusammenfallen, nochmals anders ausgedrückt dieser entsprechen.

Die oben gestellte Aufgabe wird weiterhin durch eine Verschließvorrichtung zum Verschließen eines befüllten Behälters mit einem Behälterverschluss, bevorzugt einer tragringlosen Flasche mit einem Schraubverschluss oder einem Aufdrückverschluss, mit den Merkmalen des Anspruchs 15 gelöst. Vorteilhafte Weiterbildungen ergeben sich aus der vorliegenden Beschreibung und den Figuren.

Entsprechend wird eine Verschließvorrichtung zum Verschließen eines befüllten Behälters mit einem Behälterverschluss, bevorzugt einer tragringlosen Flasche mit einem Schraubverschluss oder einem Aufdrückverschluss, vorgeschlagen, umfassend ein Verschließorgan zum Aufbringen eines Behälterverschlusses auf einen befüllten Behälter und eine Vorrichtung zum Halten eines Behälters gemäß einer der vorstehenden Ausführungsformen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht einer Verschließvorrichtung zum Verschließen eines befüllten Behälters mit einem Behälterverschluss;
- Figur 2: schematisch eine Schnittansicht durch die Verschließvorrichtung aus Figur 1;
- Figur 3: schematisch eine in der Verschließvorrichtung der Figuren 1 und 2 eingebaute Vorrichtung zum Halten eines Behälters, wobei die Haltearme der Vorrichtung in einer geschlossenen Position vorliegen;
- Figur 4: schematisch die Vorrichtung aus Figur 3, wobei die Haltearme der Vorrichtung in einer Zwischenposition vorliegen;
- Figur 5: die Vorrichtung aus Figur 3 und 4, wobei die Haltearme der Vorrichtung in einer geöffneten Position vorliegen;
- Figur 6: schematisch eine perspektivische Seitenansicht der Vorrichtung gemäß der Figuren 3 bis 5;
- Figur 7: schematisch eine Seitenansicht eines Haltearms, spezifischer eine Haltearm-Baugruppe des Haltearms der Vorrichtung aus den Figuren 3 bis 6;
- Figur 8: schematisch eine perspektivische Seitenansicht einer weiteren Vorrichtung zum Halten eines Behälters in einer Behälterbehandlungsvorrichtung;
- Figur 9: schematisch eine weitere perspektivische Seitenansicht der Vorrichtung aus Figur 8;
- Figur 10: schematisch eine Schnittansicht durch eine weitere Vorrichtung zum Halten eines Behälters; und
- Figur 11: schematisch eine Seitenansicht eines Teilbereichs der Vorrichtung aus den Figuren 3 bis 6.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

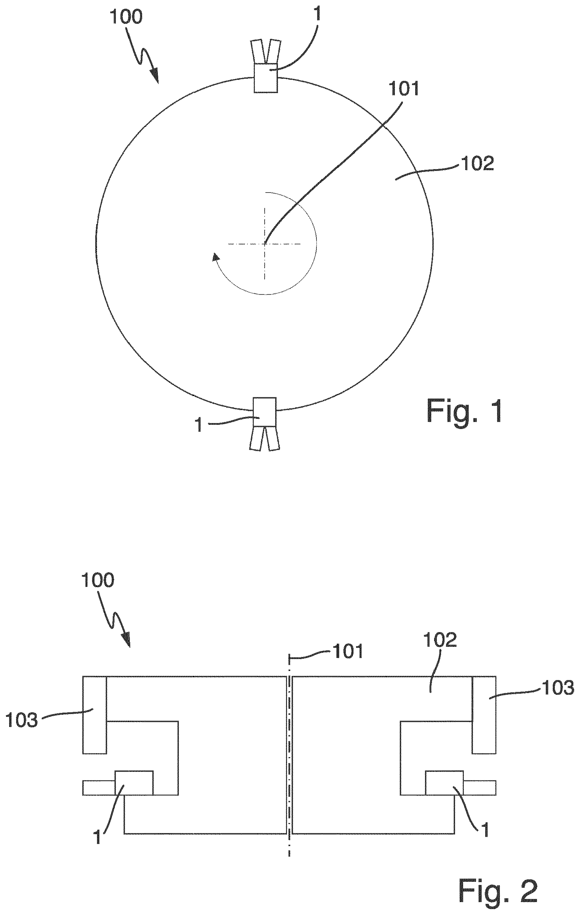

In Figur 1 ist schematisch eine Draufsicht einer Verschließvorrichtung 100 zum Verschließen eines befüllten Behälters mit einem Behälterverschluss, vorliegend einer tragringlosen Flasche mit einem Schraubverschluss oder alternativ einem Aufdrückverschluss, zu entnehmen. Figur 2 zeigt schematisch eine Schnittansicht durch die Verschließvorrichtung 100 aus Figur 1. Die Verschließvorrichtung 100 ist ein Beispiel einer Behälterbehandlungsvorrichtung. Sie ist in Rundläuferbauweise ausgebildet. Entsprechend umfasst sie ein um eine zentrale Drehachse 101 drehbares Behandlungskarussell 102, an dessen Umfang gleichmäßig verteilt eine Mehrzahl von Verschließorganen 103 zum Aufbringen eines Behälterverschlusses auf einen befüllten Behälter angeordnet ist. Jedem Verschließorgan 103 ist eine Vorrichtung 1 zum Halten eines Behälters zugeordnet. In den Figuren 1 und 2 sind jeweils beispielhaft lediglich zwei der Vielzahl von Verschließorganen 103 und Vorrichtungen 1 gezeigt.

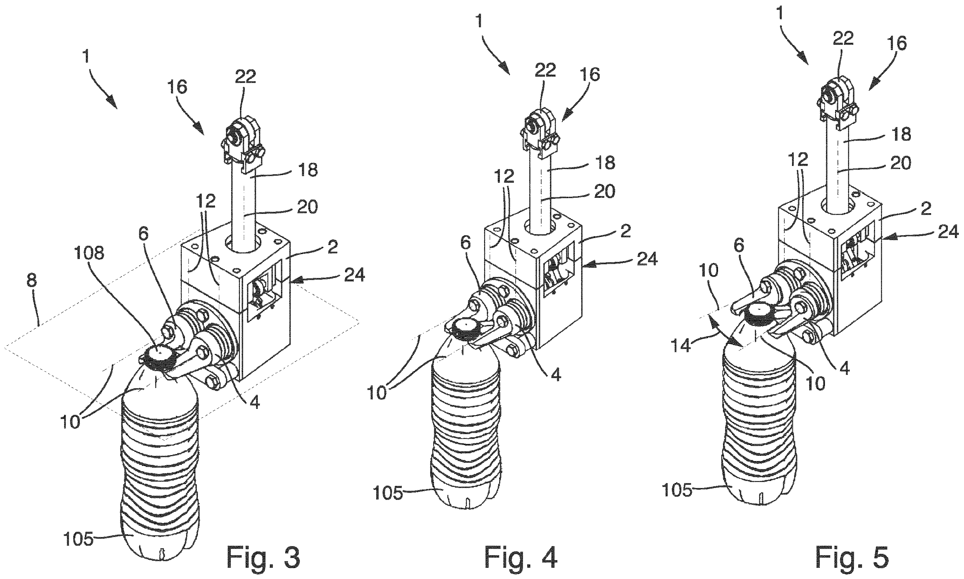

Die Figuren 3 bis 5 zeigen jeweils schematisch eine perspektivische Seitenansicht der Vorrichtung 1 zum Halten eines Behälters 105 in der Verschließvorrichtung 100 aus den Figuren 1 und 2.

Die Vorrichtung 1 umfasst einen Träger 2 und einen am Träger 2 angeordneten ersten Haltearm 4 und zweiten Haltearm 6 zum Halten des Behälters 105. Der erste Haltearm 4 und der zweite Haltearm 6 sind zwischen einer geöffneten Position zum Aufnehmen und Freigeben des Behälters 105 und einer geschlossenen Position zum Halten des Behälters 105 zueinander bewegbar an dem Träger 2 angeordnet.

Figur 3 zeigt die Vorrichtung 1 mit in der geschlossenen Position vorliegenden Haltearmen 4, 6. Figur 5 ist die geöffnete Position der Haltearme 4, 6 zu entnehmen. Figur 4 zeigt eine Position der Haltearme 4, 6 in einem Zustand während des Bewegens der Haltearme 4, 6 von der geschlossenen Position gemäß Figur 3 in die geöffnete Position gemäß Figur 5, welche im Folgenden als "Zwischenposition" bezeichnet wird.

In der geschlossenen Position definieren die Haltearme 4, 6 eine Halteebene 8, auf der in der geschlossenen Position ein Sicherungsring, genauer eine untere Fläche des Sicherungsrings, eines gehaltenen Behälters 105 aufliegt. Die Halteebene 8 ist gemäß dieser Ausführungsform horizontal orientiert, also senkrecht zur Gravitationsrichtung.

Der erste Haltearm 4 und der zweite Haltearm 6 sind zwischen der geöffneten Position und der geschlossenen Position je um eine Schwenkachse 10 schwenkbar und um eine quer zur Schwenkachse 10 orientierte, senkrecht zur Halteebene 8 angeordnete Rotationsachse 12 rotierbar. Gemäß dieser optionalen Ausführungsform sind die Schwenkachse 10 und die Rotationsachse 12 orthogonal zueinander orientiert, und die Schwenkachsen 10 sind parallel zur Halteebene 8 orientiert.

In der in Figur 3 gezeigten geschlossenen Position der Haltearme 4, 6 sind die Schwenkachsen 10 parallel zueinander orientiert. Sie können in der geschlossenen Position jedoch alternativ auch eine andere Orientierung zueinander aufweisen.

Die Vorrichtung 1 ist derart ausgebildet, dass bei einem Bewegen der Haltearme aus der geschlossenen Position in die geöffnete Position in einem ersten Bewegungsabschnitt die Haltearme 4, 6 ausschließlich eine Schwenkbewegung um ihre jeweilige Schwenkachse 10 erfahren, und zwar um einen vorgegebenen Schwenkwinkel. Der Schwenkwinkel ist optional mit 30° (= π/6 rad) vorgegeben, er kann aber auch einen anderen Wert aufweisen, beispielsweise 10°, 20°, 45° oder 60°.

Die Vorrichtung kann derart ausgebildet sein, dass der vorgegebene Schwenkwinkel veränderbar ist, beispielsweise durch eine geänderte Einstellung, die in einem Umrüstprozess vorgenommen werden kann.

Der erste Bewegungsabschnitt entspricht einer Bewegung der Haltearme 4, 6 aus der in Figur 3 gezeigten geschlossenen Position in die in Figur 4 gezeigte Zwischenposition.

An den ersten Bewegungsabschnitt anschließend erfahren die Haltearme 4, 6 in einem weiteren Bewegungsabschnitt, welcher der Bewegung der Haltearme 4, 6 aus der in Figur 4 gezeigten Zwischenposition in die in Figur 5 gezeigte geöffnete Position entspricht, ausschließlich eine Rotationsbewegung um ihre Rotationsachse 12.

Umgekehrt erfahren die Haltearme 4, 6 aus der geöffneten Position in die geschlossene Position in analoger Reihenfolge gemäß dieser optionalen Ausführungsform beginnend aus der geöffneten Position in die Zwischenposition im weiteren Bewegungsabschnitt ausschließlich eine Rotationsbewegung um ihre Rotationsachse 12, und im sich anschließenden ersten Bewegungsabschnitt ausschließlich eine Schwenkbewegung um ihre Schwenkachse 10.

Alternativ können die Haltearme 4, 6 im ersten Bewegungsabschnitt auch ausschließlich eine Rotationsbewegung um ihre Rotationsache 12 erfahren, oder eine kombinierte Bewegung, zusammengesetzt aus einer Schwenkbewegung um ihre Schwenkachse 10 und einer Rotationsbewegung um ihre Rotationsachse 12.

Ferner können die Haltearme 4, 6 im weiteren Bewegungsabschnitt auch ausschließlich eine (weitere) Schwenkbewegung um ihre Schwenkachse 10 erfahren, oder eine kombinierte Bewegung, zusammengesetzt aus einer (weiteren) Schwenkbewegung um ihre Schwenkachse 10 und einer (weiteren) Rotationsbewegung um ihre Rotationsachse 12.

Der Winkel der Rotationsbewegung ist ebenfalls vorgegeben. Vorliegend beträgt der vorgegebene Schwenkwinkel der Haltearme 4, 6 um ihre Schwenkachsen 12 je 8°. Da die Haltearme 4, 6 gegengleich zueinander rotiert werden, ergibt sich entsprechend ein durch die Haltearme 4, 6, spezifischer durch die Schwenkachsen 10, eingeschlossener Öffnungswinkel 14 der Haltearme 4, 6 zueinander von 16°. Alternativ kann auch ein anderer Schwenkwinkel vorgegeben werden, und/oder der vorgegebene Schwenkwinkel veränderbar bzw. einstellbar sein.

Um die Position der Haltearme 4, 6 relativ zum Träger 2 vorgeben zu können, umfasst die Vorrichtung 1 eine Aktuatoreinheit 16.

Die Aktuatoreinheit 16 umfasst gemäß dieser Ausführungsform eine entlang einer Steuerachse 20 verschiebbare Steuerstange 18. Die Steuerachse 20 ist in der Einbaulage der Vorrichtung 1 in der Verschließvorrichtung 100 vorliegend parallel zur Gravitationsrichtung orientiert. Die Steuerachse 20 ist vorliegend parallel zu den Rotationsachsen 12 orientiert. Die Steuerachse 20 ist vorliegend senkrecht zu den Schwenkachsen 10 orientiert. Sie ist aber nicht auf das Vorstehende beschränkt.

Die Steuerstange 18 umfasst an ihrem in den Figuren 3 bis 5 oberen Ende ein Interaktionselement, vorliegend ausgebildet als Laufrolle 22, die ausgebildet ist, entlang einer hier nicht gezeigten Kurvenführung, die drehfest an einem stationären Grundgestell der Verschließvorrichtung 100 angeordnet ist, abzurollen.

Die Aktuatoreinheit 16 umfasst ferner eine Getriebeanordnung 24, via welche die Steuerstange 20 mit den Haltearmen 4, 6 zum Steuern der Schwenkbewegungen und Rotationsbewegungen der Haltearme 4, 6 gekoppelt ist.

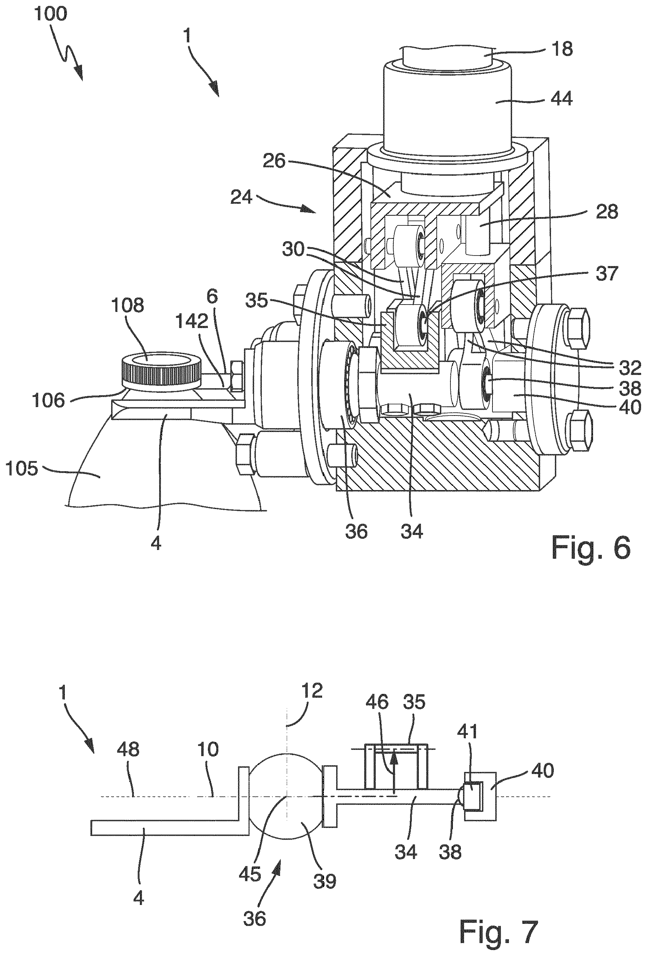

Figur 6 zeigt schematisch eine perspektivische Seitenansicht der Vorrichtung 1 gemäß der Figuren 1 bis 5, wobei der Blick auf das Innere des Trägers 2 freigegeben ist, indem der Träger 2, spezifischer ein Trägergehäuse des Trägers 2, freigeschnitten ist.

Die Aktuatoreinheit 16 umfasst einen ersten Aktuatorteil 36 zum Steuern der Schwenkbewegung der Haltearme 4, 6 um deren jeweilige Schwenkachse 10, und einen zweiten Aktuatorteil 28 zum Steuern der Rotationsbewegung der Haltearme 4, 6 um deren jeweilige Rotationsachse 12.

Der erste Aktuatorteil 26 ist über je eine erste Pleuelstange 30 mit je einem radialen Hebelarm 35, der in einem vorgegebenen Abstand zur Schwenkachse 10 an einer drehfest mit je einem Haltearm 4, 6 verbundenen, um die Schwenkachse 10 des verbundenen Haltearms 4, 6 schwenkbaren Getriebestange 34 verbunden, hier über ein Kugelgelenk 37 drehbar verbunden. Der zweite Aktuatorteil 28 ist über je eine zweite Pleuelstange 32 mit je einer der Getriebestangen 34 verbunden, vorliegend drehbar über ein Kugelgelenk 38.

Die Getriebestangen 36 sind auf ihrer Haltearmseite je via ein Kugelgelenk 36 drehfest mit je einem der Haltearme 4, 6 verbunden.

Auf ihrer der Haltearmseite gegenüberliegenden Seite sind sie via einem Gleitstein 41 in einer Führungsnut einer am Träger 2 angeordneten Gleitsteinführung 40 in einer gemäß dieser Ausführungsform beispielsweise parallel zur Halteebene 8 orientierten Translationsebene translatorisch geführt. Die Translationsebene ergibt sich aus der Richtung der translatorischen Führung der Gleitsteine 41 in der Gleitsteinführung 40 und dem Drehpunkt des Kugelgelenks 36.

Am Träger 2 ist ferner ein Auflagerabschnitt 42 zum Abstützen des Behälters 105 am Sicherungsring oder am Garantieband 106 eines aufgebrachten Behälterverschlusses 108 bei in die geöffnete Position bewegten Haltearmen 4, 6 angeordnet. Der Auflagerabschnitt 42 kann mit einem vorgegebenen Abstand unterhalb der durch die in der geschlossenen Position befindlichen Haltearme 4, 6 vorgegebenen Halteebene 8 angeordnet sein, wobei der Abstand beispielsweise derart ausgebildet ist, dass in der geschlossenen Position der Haltearme 4, 6 der aufgebrachte Behälterverschluss 108 von dem Auflagerabschnitt 42 beabstandet ist, vorliegend optional mit einer Distanz von 0,1 bis 2 mm, beispielsweise 0,3 bis 1 mm. Hier beträgt der Abstand 0,6 mm.

Die Steuerstange 18 ist relativ zum Träger 2 mittels einer Membrandichtung 44 abgedichtet.

Die in den Figuren 3 bis 5 gezeigte Vorrichtung 1 ist in einer hermetisch dichten Bauweise mit der abdichtenden Membrandichtung oben und weiteren Membrandichtungen an den Haltearmen 4 ausgebildet. Alternativ kann die Vorrichtung 1 jedoch auch in einer offenen Bauweise ausgebildet sein.

Figur 7 zeigt schematisch eine Seitenansicht des Haltearms 4, spezifischer einer Haltearm-Baugruppe des Haltearms 4, aus den Figuren 1 bis 6.

Wie bereits erwähnt, ist der Haltearm 4 an einer Seite des Kugelgelenks 36, spezifischer eines Kugelelements 39 des Kugelgelenks 36, befestigt und an der gegenüberliegenden Seite des Kugelgelenks 36, spezifischer des Kugelelements 39 des Kugelgelenks 36, ist die Getriebestange 34 am Kugelelement 39 befestigt. Das Kugelgelenk 36 stellt die Schwenkachse 10 und die Rotationsache 12 bereit bzw. bildet diese aus, welche sich im Drehpunkt 45 des Kugelgelenks 36 schneiden.

Ferner ist zu erkennen, dass der Hebelarm 25 mit einem vorgegebenen radialen Abstand 46 relativ zur Schwenkachse 10 angeordnet ist.

Zudem ist die Führung der Getriebestange 34 via ihres Gleitsteins 42 in der Gleitsteinführung 40 verdeutlicht. Die Orientierung der Führung, also die Führungsrichtung, in der Gleitsteinführung 40 erstreckt sich senkrecht zur Figurenebene der Figur 7. Sie erstreckt sich senkrecht zur Rotationsachse 12. Sie erstreckt sich senkrecht zur Gravitationsrichtung.

Durch den Drehpunkt 45 und die Führungsrichtung ist eine Rotationsebene 48 definiert, zu welcher die Rotationsachse 12 des Haltearms 4 senkrecht steht.

In Figur 6 liegen die Haltearme 4, 6 der Vorrichtung 1 in der in Figur 5 gezeigten geöffneten Position vor.

Der erste Aktuatorteil 26 und der zweite Aktuatorteil 28 sind derart mit der Steuerstange 18 gekoppelt, dass bei einem Bewegen der Steuerstange 18 aus der in Figur 6 gezeigten Position nach unten, also auf die Haltearme 4, 6 und die Getriebestangen 34 zu, zunächst ausschließlich der zweite Aktuatorteil 28 eine Verschiebung in Richtung der Steuerachse 20 auf die Getriebestangen 34 erfährt. Dadurch rotieren die Haltearme 4, 6 um ihre jeweilige Rotationsachse 12 nach innen, also aufeinander zu. Dies entspricht dem oben beschriebenen weiteren Bewegungsabschnitt. Nachdem die Steuerstange 18 einen dem weiteren Bewegungsabschnitt zugeordneten Hub in Richtung Getriebestangen 20 zurückgelegt hat, liegen die Haltearme 4, 6 in der in Figur 4 gezeigten Zwischenposition vor.

Der erste Aktuatorteil 26 und der zweite Aktuatorteil 28 sind ferner derart mit der Steuerstange 18 gekoppelt, dass nach Erreichen bzw. Überschreiten des dem weiteren Bewegungsabschnitt zugeordneten Hubs der Steuerstange 18, also aus der Zwischenposition heraus, ausschließlich der erste Aktuatorteil 26 eine Verschiebung in Richtung der Steuerachse 20 auf die Getriebestangen 34 erfährt. Dadurch schwenken die Haltearme 4, 6 um ihre jeweilige Schwenkachse 10 nach innen und oben in die geschlossene Position. Dies entspricht dem oben beschriebenen ersten Bewegungsabschnitt.

Um die Bewegungen wie vorstehend beschrieben zu ermöglichen, sind die Aktuatorteile 26, 28 jeweils innerhalb eines vorgegebenen Weges relativ zur Steuerstange 18 verschiebbar.

Der zweite Aktuatorteil 28 ist gegen die Steuerstange 18 durch eine hier nicht gezeigte Feder vorgespannt und kann bis zu einem hier nicht gezeigten, am Träger 2 angeordneten Anschlag auf die Getriebestangen 34 zu bewegt werden. Nach Kontakt mit dem Anschlag erfährt die Feder zwischen Steuerstange 18 und zweitem Aktuatorteil 28 eine Stauchung.

Der erste Aktuatorteil 26 ist gegenüber dem Träger 2 durch eine hier nicht gezeigte Feder vorgespannt. Im weiteren Bewegungsabschnitt verschiebt sich die Steuerstange 18 frei relativ zum ersten Aktuatorteil 26, letzterer bleibt also in seiner Position unverändert. In der Zwischenposition kommt es zu einem Kontakt zwischen einem hier nicht gezeigten, an der Steuerstange 18 angeordneten Anschlag und dem ersten Aktuatorteil 26. Im ersten Bewegungsabschnitt wird der erste Aktuatorteil 26 dann via den Anschlag der Steuerstange 18 auf die Getriebestangen 34 zu geschoben, die Feder zwischen erstem Aktuatorteil 26 und Träger 2 wird entsprechend zusammengedrückt. Durch die Bewegung des ersten Aktuatorteils 26 auf die Getriebestangen 34 zu erfahren die Haltearme 4, 6 ihre Schwenkbewegung über ihre jeweilige Schwenkachse 10.

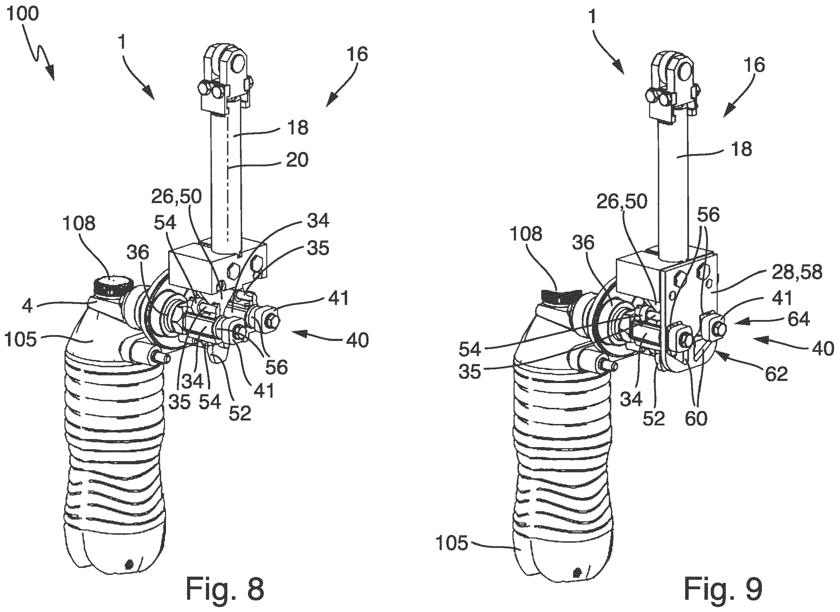

Figur 8 zeigt schematisch eine Vorrichtung 1 zum Halten eines Behälters105 in einer Behälterbehandlungsvorrichtung, beispielsweise zum Halten einer tragringlosen Flasche zum Aufbringen eines Schraubverschlusses oder eines Aufdrückverschlusses, gemäß einer weiteren Ausführungsform, die beispielsweise anstelle der Vorrichtung 1 aus den Figuren 3 bis 6 in der Verschließvorrichtung 100 gemäß den Figuren 1 und 2 eingesetzt werden kann.

Die Vorrichtung aus Figur 8 entspricht im Wesentlichen jener aus den Figuren 3 bis 6, sie unterscheidet sich lediglich im Aufbau der Aktuatoreinheit 16 und der Kopplung mit den Haltearmen 4, 6, also der Getriebeanordnung.

Anstelle der Verbindung der beiden Aktuatorteile 26, 28 via Pleuel, wie hinsichtlich der Figuren 6 und 7 beschrieben, umfasst die Aktuatoreinheit 16 der Vorrichtung 1 aus Figur 8 Aktuatorteile 26, 28, die plattenförmig ausgebildet sind.

Die Aktuatorteile 26, 28 sind fest mit der Steuerstange 18 verbunden. Sie umfassen in Folgenden näher beschriebene Führungskurven, via welcher die Schwenkbewegung und die Rotationsbewegung der Haltearme 4, 6 vorgegeben werden.

In Figur 8 sind der Träger 2 und die Gleitsteinführung 40, die im Wesentlichen identisch zu jenen in den Figuren 3 bis 6 gezeigten ausgebildet sind, und das plattenförmige zweite Aktuatorteil 28 ausgeblendet, um den Blick auf den plattenförmigen ersten Aktuatorteil 26 freizugeben, um dessen Funktionsweise verdeutlichen zu können.

In Figur 9 ist schematisch eine weitere perspektivische Seitenansicht der Vorrichtung 1 aus Figur 8 gezeigt, bei welcher der zweite Aktuatorteil 28 eingeblendet ist, um dessen Funktionsweise verdeutlichen zu können.

Wie aus Figur 8 zu erkennen, umfasst der erste Aktuatorteil 26 einen plattenförmigen Grundkörper 50, an dessen Seiten gegenüberliegend Führungsbahnen 52 ausgebildet sind. An den Führungsbahnen 52 liegen an den Hebelarmen 35 angeordnete Führungssteine 54 an, die bei einer Bewegung der Steuerstange 18 und damit des ersten Aktuatorteils 26 in Richtung der Steuerachse 20 relativ zu den Getriebestangen 34 über die ihnen zugeordnete Führungsbahn 52 gleiten.

Wie aus Figur 9 zu entnehmen, umfasst der zweite Aktuatorteil 28 einen plattenförmigen Grundkörper 58, in welchem nutartige Führungsbahnen 60 vorliegen. An den Führungsbahnen 60 sind an den Getriebestangen 34 angeordnete Führungssteine 56 geführt.

Die Lagerung der Getriebestangen 34 gegenüber dem Träger 2 und deren Anbindung an die Haltearme 4,6 entspricht auch in dieser Ausführungsform der Ausbildung gemäß Figur 7.

In den Figuren 8 und 9 sind die Haltearme 4, 6 in der geschlossenen Position positioniert.

Aufgrund der in Bezug auf die Steuerachse 20 schrägen Flächen der Führungsbahnen 52 des ersten Aktuatorteils 26 erfahren die Haltearme 4, 6 bei einer Bewegung der Steuerstange 18 aus der in den Figuren 8 und 9 gezeigten Position heraus bis in die geschlossene Position eine sukzessive Schwenkbewegung. Die Haltearme 4, 6 erfahren mithin eine Schwenkbewegung im ersten Bewegungsabschnitt und eine weitere Schwenkbewegung im weiteren Bewegungsabschnitt.

Wie aus Figur 9 ersichtlich, umfassen die Führungsbahnen 58 des zweiten Aktuatorteils 28 einen schräg zur Steuerachse 20 orientierten Abschnitt 62 und einen sich daran anschließenden parallel zur Steuerachse 20 orientierten Abschnitt 64.

Bei einer Betätigung der Steuerstange 18, also einer Bewegung der Aktuatoreinheit 16 auf die Haltearme 4, 6 zu, gleiten die Führungssteine 56 zunächst im parallel zur Steuerachse 20 bzw. parallel zur Rotationsachse 12 orientierten Abschnitt 64. Die Winkelposition der Führungssteine 56 und dadurch auch der Gleitsteine 41 relativ zur den ihnen zugehörigen Rotationsachsen 12 bleibt unverändert. Entsprechend erfahren die Haltearme 4, 6 im ersten Bewegungsabschnitt, welcher durch den parallel orientierten Abschnitt 64 vorgegeben ist, keine Rotationsbewegung.

Im weiteren Bewegungsabschnitt, welcher durch den schräg orientierten Abschnitt 62 vorgegeben ist, erfahren die Führungssteine 56 und damit die Gleitsteine 41 eine Verschiebung aufeinander zu. Entsprechend erfahren die Haltearme 4, 6 in weiteren Bewegungsabschnitt eine Rotation um ihre Rotationsachsen 12 voneinander weg.

Die Aktuatoreinheit 16 umfasst ferner ein hier nicht gezeigtes Federelement, das die Haltearme 4, 6 in die geöffnete Position vorspannt, vorliegend, indem das Federelement die Steuerstange 18 in die in den Figuren 8 und 9 gezeigte Stellung vorspannt.

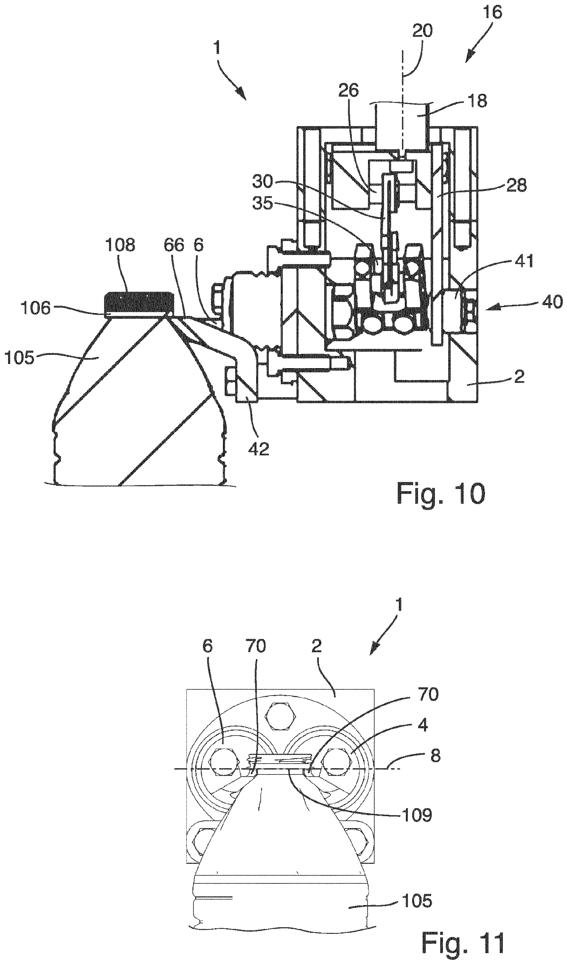

Figur 10 zeigt schematisch eine Schnittansicht durch eine Vorrichtung 1 zum Halten eines Behälters 105 in einer Behälterbehandlungsvorrichtung gemäß einer weiteren Ausführungsform, welche ebenso in der Verschließvorrichtung 100 gemäß der Figuren 1 und 2 eingesetzt werden kann. Die Vorrichtung 1 entspricht im Wesentlichen jener aus Figur 6, wobei die Aktuatoreinheit 16 anstelle des über die Pleuel an die Getriebestangen 34 angebundenen zweiten Aktuatorteils 28 einen plattenförmigen zweiten Aktuatorteil 28 analog zur Ausführungsform gemäß der Figuren 8 und 9 umfasst. Zudem ist die nutförmige Gleitsteinführung 40 direkt in einer Wand des Trägers 2, spezifischer eines Trägergehäuses, vorgesehen.

Figur 11 zeigt schematisch eine Seitenansicht eines Teilbereichs der Vorrichtung 1 aus den Figuren 3 bis 6. Diese Seitenansicht entspricht auch den Seitenansichten der gleichen Teilbereiche der Vorrichtungen 1 gemäß der Figuren 8 bis 10.

Zu erkennen ist, dass die Haltearme 4, 6 gemäß dieser optionalen Ausführungsformen je einen kragenförmigen Stützvorsprungbereich 70 zum Stützen des Behälters 105 an einem Sicherungsring 109 des Behälters 105 umfassen. Entsprechend definieren die Stützvorsprungbereiche 70 der Haltearme 4, 6 in der geschlossenen Position die Halteebene 8.

Durch das Schwenken der Haltearme 4, 6 um ihre Schwenkachsen werden die Stützvorsprungbereiche 70 in Bezug auf den Behälter 105 nach außen und unten geschwenkt. Demgemäß liegen sie in der geöffneten Position in Blickrichtung einer senkrecht zur Halteebene 8 orientierten, mittig zwischen den in der geschlossenen Position befindlichen Stützvorsprungbereichen 70 angeordneten Referenzachse radial außerhalb der Lage der Stützvorsprungbereiche 70 in der geschlossenen Position vor. Die Stützvorsprungbereiche 70 weisen in der geöffneten Position in Richtung der Referenzachse gesehen zudem ein niedrigeres Höhenniveau auf als die Stützvorsprungbereiche 70 in der geschlossenen Position aufweisen.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Träger
- 4: Erster Haltearm
- 6: Zweiter Haltearm
- 8: Halteebene
- 10: Schwenkachse
- 12: Rotationsachse
- 16: Aktuatoreinheit
- 18: Steuerstange
- 20: Steuerachse
- 22: Laufrolle
- 24: Getriebeanordnung
- 26: Erster Aktuatorteil
- 28: Zweiter Aktuatorteil
- 30: Erste Pleuelstange
- 32: Zweite Pleuelstange
- 34: Getriebestange
- 35: Haltearm
- 36: Kugelgelenk
- 37: Kugelgelenk
- 38: Kugelgelenk
- 39: Kugelelement
- 40: Gleitsteinführung
- 41: Gleitstein
- 42: Auflagerabschnitt
- 44: Membrandichtung
- 45: Drehpunkt
- 46: Radialer Abstand
- 48: Rotationsebene
- 50: Grundkörper
- 52: Führungsbahn
- 54: Führungsstein
- 56: Führungsstein
- 58: Grundkörper
- 60: Führungsbahn
- 62: Schräg zur Steuerachse orientierter Abschnitt
- 64: Parallel zur Steuerachse orientierter Abschnitt
- 70: Kragenförmiger Stützvorsprungbereich

- 100: Verschließvorrichtung
- 101: Zentrale Drehachse
- 102: Behandlungskarussell
- 103: Verschließorgan

- 105: Behälter
- 106: Garantieband
- 108: Behälterschluss
- 109: Sicherungsring

## Patentansprüche

1. Vorrichtung (1) zum Halten eines Behälters (105) in einer Behälterbehandlungsvorrichtung (100), bevorzugt zum Halten einer tragringlosen Flasche beim Aufbringen eines Schraubverschlusses (108) oder eines Aufdrückverschlusses, umfassend einen Träger (2) und einen ersten Haltearm (4) und einen zweiten Haltearm (6), die am Träger (2) angeordnet sind und zum Halten des Behälters (105) ausgebildet sind, wobei der erste Haltearm (4) und der zweite Haltearm (6) zwischen einer geöffneten Position zum Aufnehmen und Freigeben des Behälters (105) und einer geschlossenen Position zum Halten des Behälters (105) zueinander bewegbar an dem Träger (2) angeordnet sind, **dadurch gekennzeichnet, dass**
der erste Haltearm (4) und der zweite Haltearm (6) zur Bewegung zwischen der geschlossenen Position und der geöffneten Position je um eine Schwenkachse (10) schwenkbar und um eine quer zur Schwenkachse (10) orientierte Rotationsachse (12) rotierbar sind.

2. Vorrichtung (1) gemäß Anspruch 1, **dadurch gekennzeichnet, dass** die Vorrichtung (1) derart ausgebildet ist, dass bei einem Bewegen der Haltearme (4, 6) aus der geschlossenen Position in die geöffnete Position in einem ersten Bewegungsabschnitt die Haltearme (4, 6) lediglich eine Rotationsbewegung um ihre Rotationsachse (12) erfahren, und in einem sich an den ersten Bewegungsabschnitt anschließenden weiteren Bewegungsabschnitt die Haltearme (4, 6) eine Schwenkbewegung um ihre Schwenkachse (10) erfahren oder eine Schwenkbewegung um ihre Schwenkachse (10) und eine weitere Rotationsbewegung um ihre Rotationsachse (12) erfahren.

3. Vorrichtung gemäß Anspruch 1, **dadurch gekennzeichnet, dass** die Vorrichtung (1) derart ausgebildet ist, dass bei einem Bewegen der Haltearme (4, 6) aus der geschlossenen Position in die geöffnete Position in einem ersten Bewegungsabschnitt die Haltearme (4, 6) lediglich eine Schwenkbewegung um ihre Schwenkachse (10) erfahren, und in einem sich an den ersten Bewegungsabschnitt anschließenden weiteren Bewegungsabschnitt die Haltearme (4, 6) eine Rotationsbewegung um ihre Rotationsachse (12) erfahren oder eine Rotationsbewegung um ihre Rotationsachse (12) und eine weitere Schwenkbewegung um ihre Schwenkachse (10) erfahren.

4. Vorrichtung (1) gemäß einem der vorstehenden Ansprüche, **dadurch gekennzeichnet, dass** die Vorrichtung (1) eine Aktuatoreinheit (16) zum Vorgeben der Position der Haltearme (4, 6) umfasst, wobei die Aktuatoreinheit (16) einen ersten Aktuatorteil (26) zum Steuern der Schwenkbewegung der Haltearme (4, 6) um deren jeweilige Schwenkachse (10) und einen zweiten Aktuatorteil (28) zum Steuern der Rotationsbewegung der Haltearme (4, 6) um deren jeweilige Rotationsachse (12) umfasst, wobei bevorzugt der erste Aktuatorteil (26) getrennt vom zweiten Aktuatorteil (28) steuerbar ist.

5. Vorrichtung (1) gemäß einem der vorstehenden Ansprüche, **dadurch gekennzeichnet, dass** die Vorrichtung (1) eine am und/oder im Träger (2) angeordnete Getriebeanordnung (24) zum Bewegen der Haltearme (4, 6) umfasst, und/oder die Haltearme (4, 6) je drehfest mit einer um deren jeweilige Schwenkachse (12) schwenkbaren Getriebestange (34) verbunden sind, wobei die Getriebestangen (34) bevorzugt je zumindest einen radialen Hebelarm (35) aufweisen.

6. Vorrichtung (1) gemäß Anspruch 4 und 5, **dadurch gekennzeichnet, dass** der erste Aktuatorteil (26) über je eine erste Pleuelstange (30) mit je einem radialen Hebelarm (35), der drehfest mit einem Haltearm (4, 6) verbunden ist, mit der Getriebestange (34) verbunden ist, und/oder drehbar verbunden und/oder über ein Drehgelenk verbunden und/oder über ein Kugelgelenk (37) verbunden ist, und/oder der zweite Aktuatorteil (28) über je eine zweite Pleuelstange (32) mit den Getriebestangen (34) beider Haltearme (4, 6) verbunden ist, bevorzugt drehbar verbunden und/oder je über ein Drehgelenk und/oder je über ein Kugelgelenk (38) verbunden ist.

7. Vorrichtung (1) gemäß einem der Ansprüche 4 bis 6, **dadurch gekennzeichnet, dass** der erste Aktuatorteil (26) einen plattenförmigen Grundkörper (50) aufweist, umfassend zumindest eine Führungsbahn (52) zum Vorgeben der Winkelposition zumindest eines Haltearms (4, 6) relativ zu der ihm zugeordneten Schwenkachse (10), und/oder der zweite Aktuatorteil (28) einen plattenförmigen Grundkörper (58) aufweist, umfassend zumindest eine Führungsbahn (60) zum Vorgeben der Winkelposition zumindest eines Haltearms (4, 6) relativ zu der ihm zugeordneten Rotationsachse (12).

8. Vorrichtung (1) gemäß einem der Ansprüche 4 bis 7, **dadurch gekennzeichnet, dass** die Getriebestangen (34) beabstandet von ihrer Verbindung mit dem Haltearm (4, 6) translatorisch geführt sind, bevorzugt in einer Translationsebene, die bevorzugt parallel zur Halteebene (8) orientiert ist, wobei bevorzugt die Getriebestangen (34) je einen Gleitstein (41) umfassen, der in einer am Träger (2) angeordneten Führung (40), bevorzugt einer Führungsnut, geführt ist.

9. Vorrichtung (1) gemäß einem der Ansprüche 4 bis 8, **dadurch gekennzeichnet, dass** jeder Haltearm (4, 6) an einer ersten Seite eines Kugelelements (39) eines Kugelgelenks (36) befestigt ist und die Getriebestange (34) an der dem Haltearm (4, 6) gegenüberliegenden zweiten Seite des Kugelelements (39) am Kugelelement befestigt ist.

10. Vorrichtung (1) gemäß einem der vorstehenden Ansprüche, **dadurch gekennzeichnet, dass** die Vorrichtung (1), bevorzugt die Aktuatoreinheit (16), zumindest ein Federelement zum Vorspannen der Haltearme (4, 6) in eine vorgegebene Position, bevorzugt in die geschlossene Position oder in die geöffnete Position, umfasst, und/oder die Aktuatoreinheit zumindest ein Federelement zum Vorspannen des ersten Aktuatorteils (26) und/oder des zweiten Aktuatorteils (28) in eine vorgegebene Position umfasst.

11. Vorrichtung (1) gemäß einem der vorstehenden Ansprüche, **dadurch gekennzeichnet, dass** die Aktuatoreinheit (16) pneumatisch und/oder hydraulisch und/oder elektrisch steuerbar ausgebildet ist, und/oder die Aktuatoreinheit (16) ein Steuerelement zum Interagieren mit einer Kurvensteuerung und/oder einer Kulissenführung und/oder einer Nockensteuerung umfasst.

12. Vorrichtung (1) gemäß einem der vorstehenden Ansprüche, **dadurch gekennzeichnet, dass** die Haltearme (4, 6) derart ausgebildet sind, dass in der geschlossenen Position der Behälter (105) durch kragenförmigen Stützvorsprunggereiche (70) an der Unterseite des Sicherungsrings (109) des Behälters (105) gestützt ist, und/oder in der geschlossenen Position der Behälter (105) radial durch einen Richtung Behälterlängsachse orientierten Klemmbereich der Haltearme (4, 6) geklemmt ist.

13. Vorrichtung (1) gemäß einem der vorstehenden Ansprüche, **dadurch gekennzeichnet, dass** ein Auflagerabschnitt (42) zum Abstützen des Behälters (105) an dessen Sicherungsring (109) oder am Garantieband (106) eines auf den Behälter (105) aufgebrachten Behälterverschlusses (108) bei in die geöffnete Position bewegten Haltearmen (4, 6) an dem Träger (2) angeordnet ist, wobei der Auflagerabschnitt (42) bevorzugt mit einem vorgegebenen Abstand unterhalb der durch den in der geschlossenen Position befindlichen Haltearme vorgegebenen Halteebene (8) angeordnet ist, wobei der Abstand bevorzugt derart ausgebildet ist, dass in der geschlossenen Position der Haltearme (4, 6) der aufgebrachte Behälterverschluss (108) von dem Auflagerabschnitt (42) beabstandet ist, bevorzugt mit einer Distanz von 0,1 bis 2 mm, bevorzugt 0,3 bis 1 mm.

14. Vorrichtung (1) nach einem der vorstehenden Ansprüche, **dadurch gekennzeichnet, dass** die Haltearme (4, 6) je einen kragenförmigen Stützvorsprungbereich (70) zum Stützen des Behälters (105) an einem Sicherungsring (109) des Behälters (105) umfassen, wobei bevorzugt die Stützvorsprungbereiche (70) der Haltearme (4, 6) in der geschlossenen Position eine Halteebene (8) definieren, wobei bevorzugt die Stützvorsprungbereiche (70) in der geöffneten Position in Blickrichtung einer senkrecht zur Halteebene (8) orientierten, mittig zwischen den in der geschlossenen Position befindlichen Stützvorsprungbereichen (70) angeordneten Referenzachse radial außerhalb der Position der Stützvorsprungbereiche (70) in der geschlossenen Position vorliegen und die Stützvorsprungbereiche (70) in der geöffneten Position in Richtung der Referenzachse gesehen ein niedrigeres Höhenniveau als die Stützvorsprungbereiche (70) in der geschlossenen Position aufweisen, wobei die Rotationsachse (12) vorzugsweise senkrecht zur Halteebene (8) angeordnet ist.

15. Verschließvorrichtung (100) zum Verschließen eines befüllten Behälters (105) mit einem Behälterverschluss (108), bevorzugt einer tragringlosen Flasche mit einem Schraubverschluss oder einem Aufdrückverschluss, umfassend ein Verschließorgan (103) zum Aufbringen eines Behälterverschlusses (108) auf einen befüllten Behälter (105) und eine Vorrichtung (1) zum Halten eines Behälters (105) gemäß einem der vorstehenden Ansprüche.
